# EUROPÄISCHE PATENTANMELDUNG

(11) **EP 1 404 140 A1**
(43) Veröffentlichungstag der Anmeldung: **31.03.2004**
(21) Anmeldenummer: 02021965.5
(22) Anmeldetag: 30.09.2002
(51) Int. Cl.: H04Q 7/38, H04L 12/56

(54) **Verfahren zum Übertragen von Informationen und Funkkommunikationssystem**

(71) Anmelder: SIEMENS AKTIENGESELLSCHAFT, 80333 München (DE)
(72) Erfinder: Die Erfindernennung liegt noch nicht vor

(57) **Zusammenfassung**

Die Erfindung betrifft ein Verfahren und ein Funkkommunikationssystem zum Übertragen von Informationen in einem FunkKommunikationssystem mit einer Mehrzahl von Basisstationen und mindestens einer Teilnehmerstation, wobei die Basisstationen über ein Basisstationsnetzwerk miteinander vernetzt sind und wobei über einen Funkkanal zwischen einer ersten Basisstation und der einen Teilnehmerstation Nutzdaten übertragen werden. Erfindungsgemäß werden mindestens zwei Basisstationen in einer Gruppe zusammengefasst und in jeder Basisstation der Gruppe identische Nutzdaten und/oder identische Signalisierungsdaten für die Nutzdatenübertragung an die eine Teilnehmerstation vorgehalten.

## Beschreibung

Die Erfindung betrifft ein Verfahren zum Übertragen von Informationen in einem Funk-Kommunikationssystem mit einer Mehrzahl von Basisstationen und mindestens einer Teilnehmerstation nach dem Oberbegriff des Anspruchs 1.

Die Erfindung betrifft ferner ein zumindest eine Mehrzahl von über ein Basisstationsnetzwerk miteinander vernetzten Basisstationen umfassendes Funkkommunikationssystem nach dem Oberbegriff des Anspruchs 10.

Kommunikationssysteme gewinnen zunehmend an Bedeutung. Es sind starke Bestrebungen vorhanden, kabelgebundene Kommunikationssysteme mit Funkkommunikationssystemen zu verknüpfen. Die entstehenden hybriden Kommunikationssysteme führen zu einer Erhöhung der Zahl der zur Verfügung stehenden Dienste, ermöglichen aber auch eine größere Flexibilität auf Seiten der Kommunikation. Dabei werden Geräte entwickelt, die unterschiedliche Systeme nutzen können (Multi Homing).

Den Funkkommunikationssystemen kommt aufgrund der ermöglichten Mobilität der Teilnehmer eine große Bedeutung zu. Es sind Bestrebungen im Gange, eine Funkkommunikation mit mobilen Teilnehmerstationen auch mit hohen Übertragungsraten zu ermöglichen.

In Funkkommunikationssystemen werden Informationen (beispielsweise Sprache, Bildinformation, Videoinformation, SMS [Short Message Service] oder andere Daten) mit Hilfe von elektromagnetischen Wellen über eine Funkschnittstelle zwischen sendender und empfangender Station (Basisstation bzw. Teilnehmerstation) übertragen. Das Abstrahlen der elektromagnetischen Wellen erfolgt dabei mit Trägerfrequenzen, die in dem für das jeweilige System vorgesehenen Frequenzband liegen.

Für das eingeführte GSM-Mobilfunksystem (Global System for Mobile Communication) werden Frequenzen bei 900, 1800 und 1900 MHz genutzt. Diese Systeme übermitteln im wesentlichen Sprache, Telefax und Kurzmitteilungen SMS (Short Message Service) als auch digitale Daten.

Für zukünftige Mobilfunksysteme mit CDMA- oder TD/CDMA-Übertragungsverfahren, wie beispielsweise UMTS (Universal Mobile Telecommunication System) oder andere Systeme der dritten Generation, sind Frequenzen im Frequenzband von ca. 2000 MHz vorgesehen. Diese Systeme der dritten Generation werden entwickelt mit den Zielen weltweiter Funkabdeckung, einem großen Angebot an Diensten zur Datenübertragung und vor allem eine flexible Verwaltung der Kapazität der Funkschnittstelle, die bei Funk-Kommunikationssystemen die Schnittstelle mit den geringsten Ressourcen ist. Bei diesen Funk-Kommunikationssystemen soll es vor allem durch die flexible Verwaltung der Funkschnittstelle möglich sein, dass einer Teilnehmerstation bei Bedarf eine große Datenmenge mit hoher Datengeschwindigkeit senden und/oder empfangen kann.

Der Zugriff von Stationen auf die gemeinsamen Funkressourcen des Übertragungsmedium, wie zum Beispiel Zeit, Frequenz, Leistung oder Raum, wird bei diesen Funk-Kommunikationssystemen durch Vielfachzugriffsverfahren (Multiple Access, MA) geregelt.

Bei Zeitbereichs-Vielfachzugriffsverfahren (TDMA) wird jedes Sende- und Empfangsfrequenzband in Zeitschlitze unterteilt, wobei ein oder mehrere zyklisch wiederholte Zeitschlitze den Stationen zugeteilt werden. Durch TDMA wird die Funkressource Zeit stationsspezifisch separiert.

Bei Frequenzbereichs-Vielfachzugriffsverfahren (FDMA) wird der gesamte Frequenzbereich in schmalbandige Bereiche unterteilt, wobei ein oder mehrere schmalbandige Frequenzbänder den Stationen zugeteilt werden. Durch FDMA wird die Funkressource Frequenz stationsspezifisch separiert.

Bei Codebereichs-Vielfachzugriffsverfahren (CDMA) wird durch einen Spreizcode, der aus vielen einzelnen sogenannten Chips besteht, die zu übertragende Leistung/Information stationsspezifisch codiert, wodurch die zu übertragende Leistung codebedingt zufällig über einen großen Frequenzbereich gespreizt wird. Die von unterschiedlichen Stationen benutzen Spreizcodes innerhalb einer Zelle/Basisstation sind jeweils gegenseitig orthogonal oder im wesentlichen orthogonal, wodurch ein Empfänger die ihm zugedachte Signalleistung erkennt und andere Signale unterdrückt. Durch CDMA wird die Funkressource Leistung durch Spreizcodes stationsspezifisch separiert.

Bei orthogonalen Frequenz-Vielfachzugriffsverfahren (OFDM) werden die Daten breitbandig übermittelt, wobei das Frequenzband in äquidistante, orthogonale Unterträger eingeteilt wird, so dass die simultane Phasenverschiebung der Unterträger einen zwei-dimensionalen Datenfluss im Zeit-Frequenz Bereich aufspannt. Durch OFDM wird die Funkressource Frequenz mittels orthogonalen Unterträgern stationsspezifisch separiert. Die während einer Zeiteinheit auf den orthogonalen Unterträgern übermittelten zusammengefassten Datensymbole werden als OFDM Symbole bezeichnet.

Die Vielfachzugriffsverfahren können kombiniert werden. So benutzen viele Funkkommunikationssysteme eine Kombination der TDMA und FDMA Verfahren, wobei jedes schmalbandige Frequenzband in Zeitschlitze unterteilt ist.

Für das erwähnte UMTS-Mobilfunksystem wird zwischen einem sogenannten FDD-Modus (Frequency Division Duplex) und einem TDD-Modus (Time Division Duplex) unterschieden. Der TDD-Modus zeichnet sich insbesondere dadurch aus, dass ein gemeinsames Frequenzband sowohl für die Signalübertragung in Aufwärtsrichtung (UL - Uplink) als auch in Abwärtsrichtung (DL - Downlink) genutzt wird, während der FDD-Modus für die beiden Übertragungsrichtungen jeweils ein unterschiedliches Frequenzband nutzt.

In Funkkommunikationsverbindungen der zweiten und/oder dritten Generation können Informationen kanalvermittelt (CS Circuit Switched) oder paketvermittelt (PS Packet Switched) übertragen werden.

Die Verbindung zwischen Basisstation und Teilnehmerstation erfolgt über eine Funkkommunikations-Schnittstelle. Eine Basisstation kann dabei auch gegebenfalls mehrere Funkzellen bedienen.

Üblicherweise sind mindestens eine Basisstation und eine Funknetzwerkkontrolleinrichtung (RNC Radio Network Controller) Bestandteile eines Basisstationssubsystems (RNS Radio Network Subsystem). Ein Funkkommunikationssystem umfasst in der Regel mehrere Basisstationssubsysteme, die an ein Kernnetz (CN Core Network) angeschlossen sind. Dabei ist die Funknetzwerkkontrolleinrichtung des Basisstationssubsystems mit einer Zugangseinrichtung (beispielsweise: SGSN Serving GPRS Support Node) des Kernnetzes verbunden.

Insbesondere bei der Übertragung von Information mit hohen Datenraten ist ein möglichst verzögerungsfreies bzw. -armes Übertragen der Daten erwünscht. Im Zusammenhang mit einem Handover, d.h. der Über- bzw. Weitergabe einer bestehenden Verbindung mit einer Teilnehmerstation von einer Basisstation an eine andere Basisstation bzw. von einer Zelle einer Basisstation an eine andere Zelle der Basisstation, stellt dies eine besonders schwierig zu erreichende Herausforderung dar.

Der Erfindung liegt daher die Aufgabe zugrunde, ein Verfahren und ein Funkkommunikationssystem der eingangs genannten Art aufzuzeigen, welche eine möglichst schnelle und verzögerungsfreie bzw. -arme Datenübertragung ermöglichen.

Die Aufgabe wird für das Verfahren mit den Merkmalen des Anspruchs 1 und für das Funkkommunikationssystem mit den Merkmalen des Anspruchs 10 gelöst.

Vorteilhafte Ausgestaltung und Weiterbildungen sind Gegenstand der abhängigen Ansprüche.

Erfindungsgemäß werden in einem Verfahren zum Übertragen von Informationen in einem Funkkommunikationssystem mit einer Mehrzahl von Basisstationen und mindestens einer Teilnehmerstation, wobei die Basisstationen über ein Basisstationsnetzwerk miteinander vernetzt sind und wobei über einen Funkkanal zwischen einer ersten Basisstation und der einen Teilnehmerstation Nutzdaten übertragen werden, mindestens zwei Basisstationen in einer Gruppe zusammengefasst und in jeder Basisstation der Gruppe identische Nutzdaten und/oder identische Signalisierungsdaten für die Nutzdatenübertragung an die eine Teilnehmerstation vorgehalten.

Das erfindungsgemäße Vorgehen trägt wesentlich dazu bei, dass die Möglichkeit eines schnellen und in der Regel verzögerungsfreien Umschaltens von einer Basisstation zu einer anderen Basisstation der Gruppe gegeben ist.

Eine Gruppe umfasst dabei Basisstationen und vorzugsweise alle diejenigen Basisstationen, die für eine aktive Verbindung mit der Teilnehmerstation unter Berücksichtigung von bestimmten oder netzwerkseitig zu bestimmenden Vorgaben in Betracht kommen. Die Bildung bzw. Zusammensetzung einer Gruppe ist spezifisch für eine Teilnehmerstation.

Das Vorhalten der identische Nutzdaten und/oder identische Signalisierungsdaten für die Nutzdatenübertragung erfolgt durch Speicherung bzw. Pufferung der Daten in den Basisstationen der Gruppe. Dabei kann die Specher- bzw. Pufferzeit geeignet gewählt werden.

Die Gruppe der Basisstationen kann sich in Abhängigkeit von der Mobilität der Teilnehmerstation sehr rasch bis quasi gar nicht (im wesentlichen statisch) ändern. Dabei kann auch die Anzahl der Basisstationen in der Gruppe variieren. Änderungen der Gruppe der Basisstationen können aber auch durch zahlreiche andere Gründe hervorgerufen werden wie etwa die Auslastung der Funknetzressourcen und/oder die Qualitätsanforderungen von zu übertragenden Diensten.

Es erfolgt die Übermittlung der identischen Nutzdaten und/oder identischen Signalisierungsdaten an die Basisstationen der Gruppe, bevor eine Funkverbindung zwischen der einen Teilnehmerstation und einer anderen oder weiteren Basisstation der Gruppe aufgebaut wird. Damit ist ein schneller Handover wirksam vorbereitet.

Grundsätzlich ist im Rahmen der Erfindung denkbar, die identischen Nutzdaten und/oder identischen Signalisierungsdaten für die Nutzdatenübertragung über die Luft an die Basisstationen der Gruppe zu übertragen. Bevorzugt wird aber die Variante, dass die identischen Nutzdaten und/oder identischen Signalisierungsdaten an die Basisstationen der Gruppe über das Basisstationsnetzwerk übermittelt werden. Durch die Übermittelung über das Netzwerk wird weniger Interferenz erzeugt und die in der Regel knappen Funkressourcen werden nicht ohne Not belegt.

Mit Vorteil erfolgt wird die Übermittlung der identischen Nutzdaten und/oder identischen Signalisierungsdaten an die Basisstationen der Gruppe von mindestens einem Netzwerkkontroller, vorzugsweise von genau einem Netzwerkkontroller des Basisstationsnetzwerks gesteuert.

Jeder Verbindung zwischen einer Teilnehmerstation und dem Funknetz ist beipielsweise im Falle des UTRAN (UMTS Terrestrial Radio Access Network) ein Netzwerkkontroller (RNC Radio Network Controller) im sogenannten dienenden Basisstationssubsystems (SRNS Serving Radio Network Subsystem) zugeordnet. Der zugehörige Netzwerkkontroller führt in diesem Fall Funktionen einer dienenden Funknetzwerkkontrolleinrichtung (SRNC Serving Radio Network Controller) durch.

Der Netzwerkkontroller ist für die Funkressourcenverwaltung seines Basisstationssubsystems und damit für alle an ihn angeschlossenen Zellen verantwortlich. Er regelt folglich üblicherweise für jede einzelne Funkverbindung die Sendeleistung und verwaltet und weist beispielsweise die Codes für die CDMA-Kanäle zu. Das Kernnetz ist über eine Iu-Schnittstelle mit dem Netzwerkkontroller verbunden, wodurch diesem die Aufgabe zuteil wird, den Datenaustausch mit dem Kernnetz sicherzustellen. Aus Sicht der Basisstation ist diese mit einem Netzwerkkontroller über die Iub-Schnittstelle verbunden, den man für diese Basistation als ihren kontrollierenden Netzwerkkontroller (CRNC Controlling Radio Network Controller) bezeichnet. Dieser kontrolliert die Datenmenge und den Datenfluss. Eine Teilnehmerstation in einer Zelle nutzt beispielsweise unter Einsatz eines vom Netzwerkkontroller zugewiesenen Codes einen entsprechenden CDMA-Funkkanal. Im Funkbereich von zwei Funkzellen sorgt der Netzwerkkontroller für die Makrodiversität, d.h. es werden zwei Funkkanäle (jeweils ein Funkkanal pro Funkzelle) für die Teilnehmerstation aufgebaut und verwaltet. Werden die zwei Funkzellen von jeweils einem unterschiedlichen Netzwerkkontroller verwaltet und gesteuert, arbeitet derjenige Netzwerkkontroller in der Funktion eines DRNC (Drift Radio Network Controller), welcher nicht als SRNC (Serving Radio Network Controller) aktiv ist. Der SRNC Netzwerkkontroller (Serving Radio Network Controller) ist über eine Iur-Schnittstelle mit dem DRNC Netzwerkkontroller (Drift Radio Network Controller) verbunden. Der Netzwerkkontroller als Gerät kann folglich die Funktionen eines SRNC (Serving RNC), DRNC (Drift RNC) und CRNC (Controlling RNC) ausführen.

Wird die Übermittlung der identischen Nutzdaten und/oder identischen Signalisierungsdaten an die Basisstationen der Gruppe von genau einem Netzwerkkontroller des Basisstationsnetzwerks gesteuert, so ist dies bevorzugt der Netzwerkkontroller in der Funktion des SRNC (Serving Radio Network Controller).

In Weiterbildung der Erfindung umfassen die identischen Signalisierungsdaten Daten, welche die Schichten 4 und/oder höher nach ISO/OSI-Referenzmodell, insbesondere die Schichten 5 bis 7 nach ISO/OSI-Referenzmodell, betreffen.

Der Informationsaustausch zwischen zwei kommunizierenden Einrichtungen eines Funkkommunikationssystems ist komplex und wird in einzelne, hierarchische Schichten (Layer) gegliedert. Von der Internationalen Standardisierungsorganisation ISO (International Organization for Standardization) wurde ein allgemein akzeptiertes Schichtenmodell - das ISO/OSI-Referenzmodell- für offene Kommunikationssysteme spezifiziert. Das Modell beschreibt die Verbindung offener digitaler Systeme (OSI Open Systems Interconnection) und findet nahezu in allen heute realisierten Kommunikationssystemen Anwendung. Das ISO/OSI-Referenzmodell hat wesentlich zu einer weitgehenden Standardisierung der Kommunikationssysteme beigetragen.

Im ISO/OSI-Referenzmodell bietet jede Schicht (mit Ausnahme der obersten) der nächstenhöheren Schicht Dienste (Services) an. Um die Dienste erbringen zu können, erfolgt eine Informationsübermittlung zwischen den Instanzen der jeweiligen Schicht der kommunizierenden Systeme mittels sogenannter Protokolle. Für diese Übermittlung stehen einer Schicht die Dienste der nächstniedrigen Schicht zur Verfügung. Innerhalb eines Prozesses kommuniziert also jede Instanz direkt lediglich mit der nächsthöheren und der nächstniedrigen Instanz. Übergeordnete Schichten werden als Dienstnutzer und die unterliegende Schicht als Diensterbringer bezeichnet.

Das ISO/OSI-Modell beruht auf verschiedenen Prinzipien. Jede Schicht realisiert eine genau definierte Funktion, wobei sich die Festlegung der Funktionen an genormten Protokollen orientiert. Die Grenzen zwischen den einzelnen Schichten sind so gewählt, dass der Nachrichtenfluss über die Schnittstellen möglichst gering ausfällt. In der Regel bedeutet jede höhere Schicht einen neuen Abstraktionsgrad der tiefer liegenden Schichten. Teilweise werden auch verschiedene Funktionen in dieselbe Schicht gelegt.

Für die Übertragung von Informationen in einem Funkkommunikationssystem mit mindestens zwei zumindest über eine Funkkommunikations-Schnittstelle kommunizierenden Einrichtungen des Funkkommunikationssystems wird die Kommunikation in hierarchische Schichten gegliedert. Dabei werden Informationen von einer Schicht an eine Schicht anderer Hierarchie als Nachricht (primitive) übermittelt.

Im Rahmen der Erfindung ist eine leitungsvermittelte Übertragung der Nutzdaten möglich. Besondere Vorteile ergeben sich aber für den Fall, dass die Übertragung der Nutzdaten paketvermittelt erfolgt. Insbesondere im Rahmen von Datenübertragungen wie etwa nach den HSDPA Konzepten (High Speed Downlink Packet Access), welche beispielsweise für UTRA FDD und UTRA TDD diskutiert werden, unterstützt die Erfindung dadurch, dass ein schneller Zellwechsel (FCS Fast Cell Selection) ermöglicht wird, besonders effektiv eine Übertragung mit hoher Datenrate.

Die Übermittlung der identischen Nutzdaten und/oder identischen Signalisierungsdaten an die Basisstationen der Gruppe kann intermittierend, d.h. zeitweise in gleichen oder verschiedenen Zeitabständen, oder fortlaufend, d.h. bei paketvermittelter Übertragung der Nutzdaten paketweise, durchgeführt werden.

In Ausbildung der Erfindung kann die Übertragung der Nutzdaten über allgemeine und/oder über dedizierte Kanäle erfolgen. Im Falle des HSDPA (High Speed Downlink Packet Access) kann beispielsweise der HS-DSCH (High Speed Downlink Shared Channel) als allgemeiner Kanal genutzt werden.

In einer besonders vorteilhaften Weiterbildung der Erfindung erfolgt die Übertragung der Nutzdaten anhand eines Datenflussprotokolls. Auf diese Weise können beispielsweise sich ergänzende Informationen geregelt zusammengeführt werden, nämlich z.B. die netzseitigen Informationen über die Gruppe der Basisstationen und die Informationen der verbindungsaktiven Basisstation.

Besondere Vorteile sind dadurch zu erzielen, dass auf eine an alle Basisstationen der Gruppe von einem Netzwerkkontroller gesendete Kapazitätsanfrage eine Rückmeldung mit Angabe der Kapazitätsbelegung von der die aktive Funkverbindung haltenden Basisstation vor der Datenübertragung an die Basisstationen der Gruppe erfolgt.

Die Erfindung ermöglicht zumindest eine grobe und in der Regel über einen verhältnismäßig langen Zeitraum (z.B. Sekunde bis einige Sekunden) wirksame Synchronisation der Speicher (Pufferung) der Basisstationen der Gruppe. Eine eigene Übertragung von Signalisierungsdaten zur Synchronisation der Speicher der Basisstationen der Gruppe ist daher entbehrlich. Damit kann die Erfindung auf einfache Art und Weise einen wirksamen Beitrag für einen schnellen Handover leisten.

Im erfindungsgemäßen Funkkommunikationssystem, welches zumindest eine Mehrzahl von über ein Basisstationsnetzwerk miteinander vernetzten Basisstationen umfasst, wobei Mittel zur Übertragung von Nutzdaten über einen Funkkanal zwischen einer ersten Basisstation und mindestens einer Teilnehmerstation vorgesehen sind, sind mindestens zwei Basisstationen in einer Gruppe zusammengefasst und in jeder Basisstation der Gruppe sind Mittel zum Vorhalten von identischen Nutzdaten und/oder identischen Signalisierungsdaten für die Nutzdatenübertragung an die eine Teilnehmerstation vorhanden. Diese Mittel umfassen geeignete Speichermittel zum Puffern der Daten in den Basisstationen.

Im Funkkommunikationssystem kann vorgesehen sein, dass mindestens ein Netzwerkkontroller, vorzugsweise genau ein Netzwerkkontroller, des Basisstationsnetzwerks zur Steuerung der Übermittlung der identischen Nutzdaten und/oder identischen Signalisierungsdaten an die Basisstationen der Gruppe vorhanden ist.

Bevorzugt sind im erfindungsgemäßen Funkkommunikationssystem Mittel zum paketvermittelten Übertragen der Nutzdaten vorhanden.

Vorteilhafterweise sind im erfindungsgemäßen Funk-Kommunikationssystem Mittel zum Übertragen der Nutzdaten Übertragung der Nutzdaten anhand eines Datenflussprotokolls vorhanden.

Das beschriebene Funkkommunikationssystem eignet sich insbesondere zur Durchführung des erfindungsgemäßen Verfahrens. Im Funkkommunikationssystem bzw. seinen einzelnen Bestandteilen können jeweils entsprechende Mittel und Einrichtungen zur Durchführung des Verfahrens und seiner Ausgestaltungen und Weiterbildungen vorhanden sein.

Nachfolgend soll die Erfindung anhand von Ausführungsbeispielen und zwei Figuren näher erläutert werden.

Hierbei zeigen:
- Fig. 1:: eine schematische Darstellung eines Funkkommunikationsnetzes zur Anwendung der Erfindung im UTRAN,
- Fig. 2:: eine schematische Darstellung des Ablaufprinzips der erfindungsgemäßen Übertragung der Daten
- Fig. 3:: eine schematische Darstellung der erfindungsgemäßen Übertragung zwischen Netzwerkkontroller, Basisstation und Teilnehmerstation.

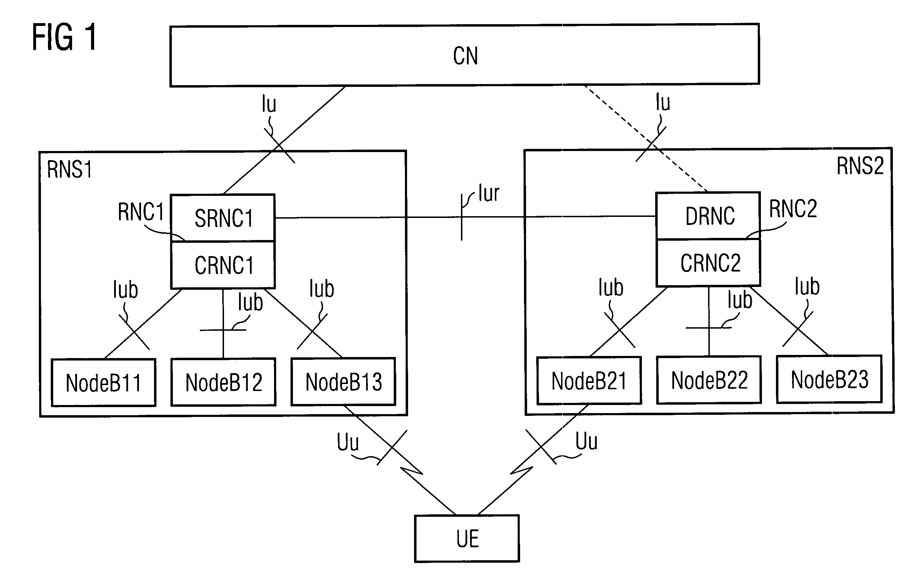

Figur 1 zeigt eine schematische Darstellung eines Funkkommunikationsnetzes des UTRAN für eine erfindungsgemäße Übertragung von Information. Das Funkkommunikationsnetz umfasst mehrere Basisstationssubsysteme RNS1 und RNS2, die an ein Kernnetz CN jeweils über eine Iu-Schnittstelle angeschlossen sind.

Jedes der Basisstationssubsysteme RNS1 und RNS2 in Figur 1 weist einen Netzwerkkontroller auf: Basisstationssubsystem RNS1 den Netzwerkkontroller RNC1 und Basisstationssubsysteme RNS2 den Netzwerkkontroller RNC2.

Der Netzwerkkontroller RNC1 ist im in Figur 1 dargestellten Ausführungsbeispiel funktionell in die Netzwerkkontroller SRNC (Serving Radio Network Controller) und CRNC1 (Controlling Radio Network Controller) aufgeteilt. Ferner sind drei Basisstationen NodeB11, NodeB12 und NodeB13 als Bestandteile des Basisstationssubsystems RNS1 gezeigt.

Der Netzwerkkontroller RNC2 ist im in Figur 1 dargestellten Ausführungsbeispiel funktionell in die Netzwerkkontroller DRNC (Drift Radio Network Controller) und CRNC1 (Controlling Radio Network Controller) aufgeteilt. Die drei Basisstationen NodeB21, NodeB22 und NodeB23 gehören zum Basisstationssubsystem RNS2.

Die Basisstationen bedienen einzelne und/oder mehrere jeweils nicht dargestellte Funkzellen. Die Basisstationen sind jeweils mit dem Netzwerkkontrollern CRNC1 bzw. CRNC2 (Controlling Radio Network Controller) über Iub-Schnittstellen verbunden.

Der Netzwerkkontroller SRNC (Serving Radio Network Controller) des Basisstationssubsystems RNS1 ist außerdem über eine Iur-Schnittstelle mit dem Netzwerkkontroller DRNC (Drift Radio Network Controller) des Basisstationssubsystems RNS2 verbunden.

Die Basisstationen NodeB12, NodeB13 und NodeB21 sind beispielsweise in einer Gruppe zusammengefasst, wobei in jeder Basisstation NodeB12, NodeB13 und NodeB21 dieser Gruppe identische Nutzdaten und/oder identische Signalisierungsdaten für die Nutzdatenübertragung an die eine Teilnehmerstation vorgehalten werden.

Die Teilnehmerstation UE hält derzeit eine Funkverbindung über eine Uu-Schnittstelle mit der Basisstation NodeB13 des Basisstationssubsystems RNS1, wobei ein Handover zur vom Netzwerkkontroller CRNC2 kontrollierten Basisstation NodeB21 des Basisstationssubsystems RNS2 bevorsteht. Nach erfolgtem Handover zur Basisstation NodeB21 wird der Netzwerkkontroller DRNC zum neuen Netzwerkkontroller SRNC und verwaltet dann über die entsprechende Iu-Schnittstelle (gestrichelt dargestellt) die Anbindung an das Kernnetz CN.

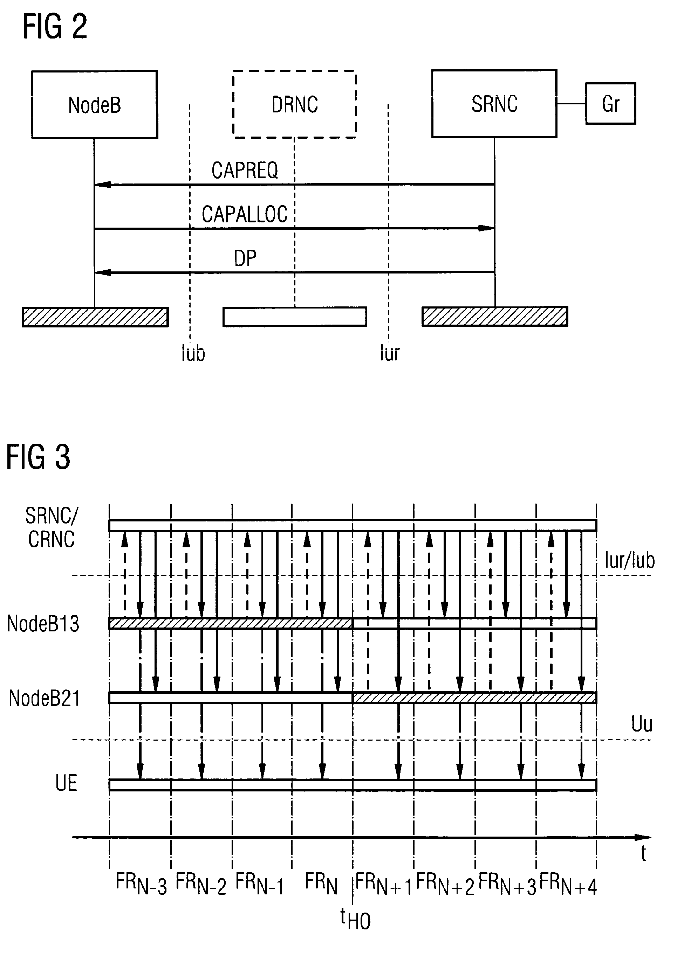

Figur 2 zeigt eine schematische Darstellung des Ablaufprinzips der erfindungsgemäßen Übertragung der Daten. Der Ablauf basiert beispielsweise auf einem Datenflussprotokoll. Der Netzwerkkontroller SRNC (Serving Radio Network Controller) überträgt direkt an die entsprechenden Basisstationen der Gruppe, die über den zugehörigen kontrollierenden Netzwerkkontroller CRNC verbunden sind (im Beispiel nach Figur 1 überträgt der Netzwerkkontroller SRNC einerseits an die Basisstationen NodeB12 und NodeB13 direkt) und andererseits via Iur-Schnittstelle über den Netzwerkkontroller DRNC (Drift Radio Network Controller) und an die entsprechenden Basisstationen der Gruppe (im Beispiel nach Figur 1 überträgt der Netzwerkkontroller SRNC über den mittels Iur-Schnittstele angebundenen Netzwerkkontroller DRNC an die Basisstation NodeB21).

Auf die an alle Basisstationen NodeB der Gruppe vom Netzwerkkontroller SRNC gesendete Kapazitätsanfrage CAPREQ (CAPACITY REQUEST) erfolgt eine Rückmeldung CAPALLOC mit Angabe der Kapazitätsbelegung (CAPACITY ALLOCATION) von der die aktive Funkverbindung haltenden Basisstation (im Beispiel von Figur 1 ist das die Basisstation NodeB13). Die Kenntnis der Gruppe beim Netzwerkkontroller SRNC ist in Figur 2 mit einem Kästchen Gr angedeutet. Anschließend werden die Nutzdaten DP (DATA PACKET) an alle Basisstationen der Gruppe übertragen (dies sind im Falle des Beispiels zu Figur 1 die Basisstation NodeB12, NodeB13 und NodeB21).

Figur 3 liefert eine schematische Darstellung der erfindungsgemäßen Datenübertragung zwischen Netzwerkkontroller SRNC/CRNC, den beiden an einem Handover beteilgten Basisstationen NodeB13 und NodeB21 und der Teilnehmerstation UE. Es sind im unteren Teil der Darstellung Funkrahmen FR_{N-3}, FR_{N-2}, FR_{N-1}, FR_{N}, FR_{N+1}, FR_{N+2}, FR_{N+3} und FR_{N+4} über einer Zeitachse t aufgetragen.

Der von der Basisstation NodeB13 bzw. NodeB21 zum Netzwerkkontroller SRNC/CRNC von unten nach oben gerichtete Pfeil mit gestrichelter Linie symbolisiert die Kapazitätsanfrage CAPREQ (CAPACITY REQUEST) aus Figur 2. Ferner sind mit vom Netzwerkkontroller SRNC/CRNC zu den Basisstationen NodeB13 bzw. NodeB21 von oben nach unten gerichteten Pfeilen die Nutzdatenübertragungen DP (DATA PACKET) gezeigt. Die von der Basisstation NodeB13 bzw. NodeB21 zur Teilnehmerstation UE von oben nach unten gerichtete Pfeil mit strichpunktierter Linie stehen für die Nutzdatenübertragungen zur Teilnehmerstation UE über die Luftschnittstelle. Bis zum Zeitpunkt t_{HO} des Handovers und dem Funkrahmen FR_{N} erfolgt eine Nutzdatenübertragungen zur Teilnehmerstation UE ausschließlich über die Basisstation NodeB13, während nach dem Zeitpunkt t_{HO} des Handovers ab dem Funkrahmen FR_{N+1} eine Nutzdatenübertragungen zur Teilnehmerstation UE ausschließlich über die Basisstation NodeB13 durchgeführt wird. Die Zeiträume, in denen die Basisstation NodeB13 bzw. NodeB21 die verbindungsaktive Basisstation ist, sind mit einem dunklen Balken in Figur 3 hervorgehoben.

## Patentansprüche

1. Verfahren zum Übertragen von Informationen in einem Funk-Kommunikationssystem mit einer Mehrzahl von Basisstationen (NodeB11 bis NodeB23) und mindestens einer Teilnehmerstation (UE),
wobei die Basisstationen über ein Basisstationsnetzwerk (RNS1, RNS2, CN) miteinander vernetzt sind,
wobei über einen Funkkanal zwischen einer ersten Basisstation (NodeB13) und der einen Teilnehmerstation (UE) Nutzdaten (PD) übertragen werden,
**dadurch gekennzeichnet,**
**dass** mindestens zwei Basisstationen (NodeB13, NodeB21) in einer Gruppe zusammengefasst werden,
**dass** in jeder Basisstation der Gruppe (NodeB13, NodeB21) identische Nutzdaten und/oder identische Signalisierungsdaten für die Nutzdatenübertragung an die eine Teilnehmerstation (UE) vorgehalten werden.

2. Verfahren nach Anspruch 1, dadurch gekennzeichn e t, dass die identischen Nutzdaten und/oder identischen Signalisierungsdaten an die Basisstationen (NodeB13, NodeB21) der Gruppe über das Basisstationsnetzwerk übermittelt werden.

3. Verfahren nach Anspruch 2, dadurch gekennzeichn e t, dass die Übermittlung der identischen Nutzdaten (DP) und/oder identischen Signalisierungsdaten (CAPREQ) an die Basisstationen (NodeB13, NodeB21) der Gruppe von mindestens einem Netzwerkkontroller (RNC1), vorzugsweise von genau einem Netzwerkkontroller (SRNC) des Basisstationsnetzwerks (RNS1, RNS2, CN) gesteuert wird.

4. Verfahren nach einem Ansprüche 1 bis 3, **dadurch gekennzeichnet, dass** die identischen Signalisierungsdaten Daten (CAPREQ) umfassen, welche die Schichten 4 und/oder höher nach ISO/OSI-Referenzmodell, insbesondere die Schichten 5 bis 7 nach ISO/OSI-Referenzmodell, betreffen.

5. Verfahren nach einem Ansprüche 1 bis 4, **dadurch gekennzeichnet, dass** die Übertragung der Nutzdaten (DP) paketvermittelt erfolgt.

6. Verfahren nach einem Ansprüche 1 bis 5, **dadurch gekennzeichnet, dass** die Übermittlung der identischen Nutzdaten (DP) und/oder identischen Signalisierungsdaten an die Basisstationen (NodeB13, NodeB21) der Gruppe intermittierend oder fortlaufend durchgeführt wird.

7. Verfahren nach einem Ansprüche 1 bis 6, **dadurch gekennzeichnet, dass** die Übertragung der Nutzdaten (DP) über allgemeine und/oder über dedizierte Kanäle erfolgt.

8. Verfahren nach einem Ansprüche 1 bis 7, **dadurch gekennzeichnet, dass** die Übertragung der Nutzdaten (DP) anhand eines Datenflussprotokolls erfolgt.

9. Verfahren nach Anspruch 8, **dadurch gekennzeichnet, dass** auf eine an alle Basisstationen (NodeB13, NodeB21) der Gruppe von einem Netzwerkkontroller (SRNC) gesendete Kapazitätsanfrage (CAPREQ) eine Rückmeldung (CAPALLOC) mit Angabe der Kapazitätsbelegung von der die aktive Funkverbindung haltenden Basisstation (NodeB13) vor der Nutzdatenübertragung (DP) an die Basisstationen der Gruppe erfolgt.

10. Funkkommunikationssystem umfassend zumindest eine Mehrzahl von über ein Basisstationsnetzwerk (RNS1, RNS2, CN) miteinander vernetzten Basisstationen (NodeB13, NodeB21),
wobei Mittel zur Übertragung von Nutzdaten (DP) über einen Funkkanal zwischen einer ersten Basisstation (NodeB13) und mindestens einer Teilnehmerstation (UE) vorgesehen sind,
**dadurch gekennzeichnet,**
**dass** mindestens zwei Basisstationen (NodeB13, NodeB21) in einer Gruppe zusammengefasst sind,
**dass** in jeder Basisstation (NodeB13, NodeB21) der Gruppe Mittel zum Vorhalten von identischen Nutzdaten (DP) und/oder identischen Signalisierungsdaten (CAPREQ) für die Nutzdatenübertragung (DP) an die eine Teilnehmerstation (UE) vorhanden sind.

11. Funk-Kommunikationssystem nach Anspruch 10, **dadurch gekennzeichnet, dass** mindestens ein Netzwerkkontroller (RNC1), vorzugsweise genau ein Netzwerkkontroller (SRNC), des Basisstationsnetzwerks (RNS1, RNS2, CN) zur Steuerung der Übermittlung der identischen Nutzdaten (DP) und/oder identischen Signalisierungsdaten (CAPREQ) an die Basisstationen der Gruppe vorhanden ist.

12. Funk-Kommunikationssystem nach Anspruch 10 oder 11,
**dadurch gekennzeichnet, dass** Mittel zum paketvermittelten Übertragen der Nutzdaten (DP) vorhanden sind.

13. Funk-Kommunikationssystem nach Anspruch 10, 11 oder 12,
**dadurch gekennzeichnet, dass** Mittel zum Übertragen der Nutzdaten (DP) anhand eines Datenflussprotokolls vorhanden sind.
